# EUROPEAN PATENT APPLICATION

(11) **EP 4 013 034 A1**
(43) Date of publication of application: **15.06.2022**
(21) Application number: 20924850.9
(22) Date of filing: 02.11.2020
(51) Int. Cl.: H04N 5/232, H04N 7/14

(54) **IMAGE CAPTURING METHOD AND APPARATUS, AND COMPUTER DEVICE AND STORAGE MEDIUM**

(30) Priority: 13.03.2020 CN 202010175237
(71) Applicant: TENCENT TECHNOLOGY (SHENZHEN) COMPANY LIMITED, Shenzhen, GUANGDONG 518057, (CN)
(72) Inventor: WANG, Qianyi, Shenzhen, Guangdong 518057 (CN)
(74) Representative: Eisenführ Speiser
(86) International application number: PCT/CN2020/125887
(87) International publication number: WO 2021/179641

(57) **Abstract**

An image capturing method, comprising: displaying a user operation page of an information interaction virtual room, wherein the user operation page comprises a photographing control and an image area, the image area comprises a preview image, and the preview image comprises a member image of at least two room members; when a triggering operation for the photographing control is detected, performing image capturing on the preview image; and outputting a captured image.

## Description

This application claims priority to Chinese Patent Application No. 2020101752379, entitled "IMAGE SHOOTING METHOD AND APPARATUS, COMPUTER DEVICE, AND STORAGE MEDIUM" filed with the China National Intellectual Property Administration on March 13, 2020, which is incorporated herein by reference in its entirety.

### FIELD OF THE TECHNOLOGY

The present disclosure relates to the field of Internet technologies, and in particular, to an image shooting method, an image shooting apparatus, a computer device, and a storage medium.

### BACKGROUND OF THE DISCLOSURE

In daily life, it is common to shoot by using an electronic device having a shooting function, such as a mobile phone or a camera. The captured content may be any content that can be collected by the electronic device. For example, the electronic device may be used to shoot several objects that are gathered.

### SUMMARY

According to various embodiments provided in the present disclosure, an image shooting method, an image shooting apparatus, a computer device, and a storage medium are provided.

An embodiment of the present disclosure provides an image shooting method, executed by a computer device and including:
displaying a user operation page of an information exchange virtual room on a client, the user operation page including a shooting control and an image region, a preview image being displayed in the image region, and the preview image including member images of at least two room members;
performing image shooting on the preview image when a trigger operation through the shooting control is detected; and
outputting an image obtained by the image shooting.

An embodiment of the present disclosure provides an image shooting apparatus, disposed in a computer device and including:
a display module, configured to display a user operation page of an information exchange virtual room on a client, the user operation page including a shooting control and an image region, a preview image being displayed in the image region, and the preview image including member images of at least two room members;
a shooting module, configured to perform image shooting on the preview image when a trigger operation through the shooting control is detected; and
an output module, configured to output an image obtained by the image shooting.

An embodiment of the present disclosure further provides a computer device, including a memory, one or more processors, where computer-readable instructions are stored in the memory and executable by the one or more processors, the one or more processors is configured to perform any image shooting method provided in the embodiments of the present disclosure when executing the computer-readable instructions.

An embodiment of the present disclosure further provides one or more computer-readable storage media, storing computer-readable instructions, where the computer-readable instructions are used to, when being loaded to one or more processors, perform any image shooting method provided in the embodiments of the present disclosure.

Details of one or more embodiments of the present disclosure are provided in the accompanying drawings and descriptions below. Based on the specification, the accompanying drawings, and the claims of the present disclosure, other features, objectives, and advantages of the present disclosure become clearer.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and a person skilled in the art may still derive other drawings from these accompanying drawings without creative efforts.
FIG. 1 is a schematic diagram of a scenario applying an image shooting method according to an embodiment of the present disclosure.
FIG. 2 is a schematic flowchart of an image shooting method according to an embodiment of the present disclosure.
FIG. 3 is a schematic diagram of a partial page operation of an image shooting method according to an embodiment of the present disclosure.
FIG. 4 is a schematic diagram of another partial page operation of an image shooting method according to an embodiment of the present disclosure.
FIG. 5 is a schematic diagram of another partial page operation of an image shooting method according to an embodiment of the present disclosure.
FIG. 6 is a schematic diagram of another partial page operation of an image shooting method according to an embodiment of the present disclosure.
FIG. 7 is a schematic diagram of another partial page operation of an image shooting method according to an embodiment of the present disclosure.
FIG. 8 is a schematic diagram of another partial page operation of an image shooting method according to an embodiment of the present disclosure.
FIG. 9 is a schematic diagram of another partial page operation of an image shooting method according to an embodiment of the present disclosure.
FIG. 10 is a schematic diagram of another partial page operation of an image shooting method according to an embodiment of the present disclosure.
FIG. 11 is a schematic diagram of another partial page operation of an image shooting method according to an embodiment of the present disclosure.
FIG. 12 is a schematic diagram of another partial page operation of an image shooting method according to an embodiment of the present disclosure.
FIG. 13 is a schematic diagram of another partial page operation of an image shooting method according to an embodiment of the present disclosure.
FIG. 14 is a schematic diagram of another partial page operation of an image shooting method according to an embodiment of the present disclosure.
FIG. 15 is another schematic flowchart of an image shooting method according to an embodiment of the present disclosure.
FIG. 16 is a schematic diagram of another partial page operation of an image shooting method according to an embodiment of the present disclosure.
FIG. 17 is a schematic diagram of another partial page operation of an image shooting method according to an embodiment of the present disclosure.
FIG. 18 is a schematic diagram of another partial page operation of an image shooting method according to an embodiment of the present disclosure.
FIG. 19 is a schematic diagram of another partial page operation of an image shooting method according to an embodiment of the present disclosure.
FIG. 20 is a schematic diagram of another partial page operation of an image shooting method according to an embodiment of the present disclosure.
FIG. 21 is a diagram of an example of a technical implementation of an image shooting method according to an embodiment of the present disclosure.
FIG. 22 is a block diagram of an image shooting apparatus according to an embodiment of the present disclosure.
FIG. 23 is another block diagram of an image shooting apparatus according to an embodiment of the present disclosure.
FIG. 24 is another block diagram of an image shooting apparatus according to an embodiment of the present disclosure.
FIG. 25 is a block diagram of a computer device according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure. Apparently, the described embodiments are some of the embodiments of the present disclosure rather than all of the embodiments. All other embodiments obtained by a person skilled in the art based on the embodiments of the present disclosure without creative efforts shall fall within the protection scope of the present disclosure.

Artificial Intelligence (AI) is a theory, a method, a technology, and an application system that use a digital computer or a machine controlled by the digital computer to simulate, extend, and expand human intelligence to perceive an environment, obtain knowledge, and use knowledge to obtain an optimal result. In other words, AI is a comprehensive technology of computer science, which attempts to understand the essence of intelligence and produce a new type of intelligent machine that can react in a similar way to human intelligence. AI is to study design principles and implementation methods of various intelligent machines, so that the machines have the functions of perception, reasoning, and decision-making.

Computer vision (CV) is a science that studies how to enable a machine to "see", and to be specific, to implement machine vision such as recognition, tracking, measurement, and the like for a target by using a camera and a computer in replacement of human eyes, and further perform graphic processing, so that the computer processes the target into an image more suitable for human eyes to observe, or more suitable to be transmitted to an instrument for detection. As a scientific subject, CV studies related theories and technologies, and attempts to establish an AI system that can obtain information from images or multidimensional data. The CV technologies generally include technologies such as image processing, image recognition, image semantic understanding, image retrieval, OCR, video processing, video semantic understanding, video content/behavior recognition, three-dimensional object reconstruction, a 3D technology, virtual reality, augmented reality, synchronous positioning, and map construction, and further include biological feature recognition technologies such as face recognition and fingerprint recognition.

With the research and progress of the AI technology, the AI technology is studied and applied to a plurality of fields, such as a smart home, a smart wearable device, a virtual assistant, a smart speaker, smart marketing, unmanned driving, automatic driving, an unmanned aerial vehicle, a robot, smart medical care, and smart customer service. It is believed that with the development of technologies, the AI technology will be applied in more fields, and play an increasingly important role.

The solutions provided in the embodiments of the present disclosure relate to technologies such as CV of AI, and are specifically described by using the following embodiments.

Embodiments of the present disclosure provide an image shooting method, an image shooting apparatus, a computer device, and a storage medium. Specifically, the embodiments of the present disclosure may be applied in a first image shooting apparatus and a second image shooting apparatus. The first image shooting apparatus may be integrated into a first computer device. The first computer device may include an electronic device such as a terminal or a server. The terminal may include an electronic device capable of image shooting, such as a camera, a video camera, a smartphone, a tablet computer, a notebook computer, or a personal computer. The terminal may be a single terminal, or may be a terminal set including several terminals. The server may be a single server, or may be a server cluster.

The second image shooting apparatus may be integrated into a second computer device. The second computer device may include an electronic device such as a terminal or a server. The terminal may include an electronic device capable of image shooting, such as a camera, a video camera, a smartphone, a tablet computer, a notebook computer, or a personal computer. The terminal may be a single terminal, or may be a terminal set including several terminals. The server may be a single server, or may be a server cluster. The server may include a web server, an application server, a data server, and the like.

The following describes an image shooting method by using an example in which the first computer device is a terminal and the second computer device is a server in this embodiment of the present disclosure.

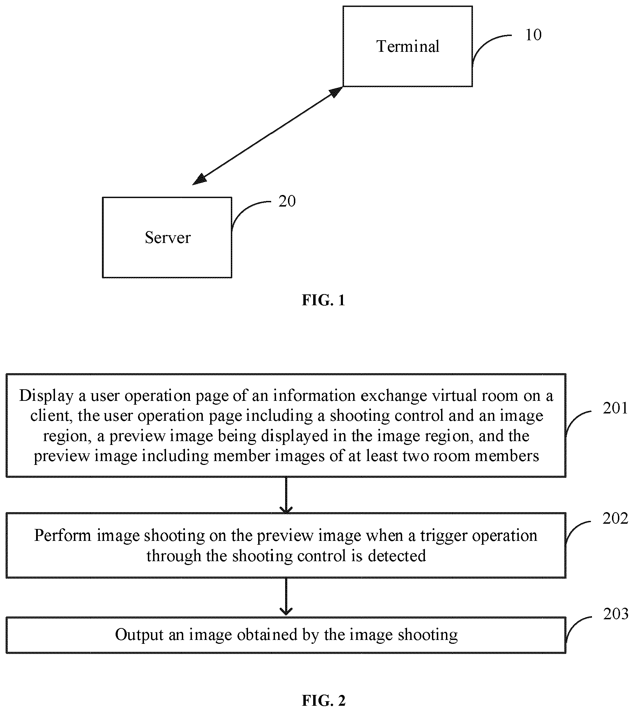

As shown in FIG. 1, in the solution of this embodiment of the present disclosure, interaction is performed between the terminal and the server. This embodiment describes an image shooting system, by using an example that a first image shooting apparatus is integrated on a terminal 10 and a second image shooting apparatus is integrated on a server 20.

Specifically, the terminal 10 may display a user operation page of an information exchange virtual room on a client, the user operation page including a shooting control and an image region, a preview image being displayed in the image region, and the preview image including member images of at least two room members. The terminal 10 may perform image shooting on the preview image when a trigger operation through the shooting control is detected, and then the terminal 10 may output an image obtained by the image shooting.

Before displaying the user operation page of the information exchange virtual room on the client, the terminal 10 may acquire an image collected in real time by a local terminal, extract a local member image in the real-time collected image and location information of the local member image in the real-time collected image, transmit the local member image and the location information of the local member image to the server 20, and finally receive a preview image returned by the server 20 based on the local member image and the location information of the local member image, where the preview image includes member images of at least two room members.

For example, an information exchange virtual room includes two room members: a member 1 and a member 2. The terminal 10 may include a terminal A and a terminal B. On the terminal A, an application may transmit, to the server 20 by the member 1 in the information exchange virtual room, a member image 1 and location information of the member image 1 that are extracted from an image collected in real time by a local terminal. On the terminal B, the application may transmit, to the server 20 by the member 2 in the information exchange virtual room, a member image 2 and location information of the member image 2 that are extracted from an image collected in real time by a local terminal, and then the terminals A and B may receive a preview image returned by the server 20, where the preview image includes the member image 1 of the member 1 and the member image 2 of the member 2.

Specifically, the server 20 may receive member images of at least two room members. The member image carries location information. Then, based on a quantity of member images and a preset display mode, the server 20 may determine an image sub-region of each member image in the preview image, and render, according to the location information carried in the member image, each member image to an image sub-region corresponding to the member image, to obtain the preview image. The server 20 may further apply an image effect on the preview image based on a preset image effect, and transmit the preview image having the image effect to the terminal 10.

For example, the server 20 may receive the member image 1, the location information of the member image 1, the member image 2, and the location information of the member image 2, and then determine, according to the quantity of member images (for example, the quantity of member images is 2) and the preset display mode (for example, a same-screen mode), that an image sub-region of the member image 1 is the left 2/3 region of the preview image, and an image sub-region of the member image 2 is the right 2/3 region of the preview image; and render the member image 1 in the left 1/3 region of the preview image according to the location information corresponding to the member image 1 (the left 1/2), and render the member image 2 in the middle 1/3 region of the preview image according to a relative location corresponding to the member image 2, to obtain a preview image; and apply an image effect on the preview image (render a background of the preview image to yellow) according to a preset image effect (for example, the background is yellow), and transmits a preview image applied with the image effect (a preview image whose background is yellow) to the terminal 10. The terminal 10 may include the terminal A and the terminal B.

Detailed descriptions are provided below. The description sequence of the following embodiments is not intended to limit orders of the embodiments.

An embodiment of the present disclosure is described from a perspective of a first image shooting apparatus. The first image shooting apparatus may be specifically integrated into a terminal capable of image shooting.

An embodiment of the present disclosure provides an image shooting method. The method may be performed by one or more processors of a terminal. As shown in FIG. 2, a procedure of the image shooting method may be as follows.

201. A user operation page of an information exchange virtual room is displayed, the user operation page including a shooting control and an image region, a preview image being displayed in the image region, and the preview image including member images of at least two room members.

The information exchange virtual room is a virtual room used for exchanging information. It may be understood that the information exchange virtual room is a virtual room created online, and may be used for information exchange and virtual article exchange.

The image in this embodiment of the present disclosure may include an original image collected by a shooting apparatus on the terminal. For example, an image collected by a camera mounted on the terminal when an image processing control is not enabled may be used as an original image. Compared with a processed image, the original image may present content and details of a real scene more accurately.

The image in this embodiment of the present disclosure may alternatively include an image obtained by processing an original image in a certain manner. The processing herein may be performed by the terminal, or may be performed in a manner that the terminal transmits the original image to another computer device (such as a server) capable of image processing, then the another computer device returns the processed image to the terminal, and the terminal displays the processed image on a page. In this manner, the original image can be flexibly adjusted according to an actual requirement of a user (such as beautifying the image or partially magnifying the image), thereby better meeting a personalized requirement of the user and obtaining a more accurately processed image.

The image may include a single image, or may include a video image formed by several frames of images. Image content may include any content that can be collected by the shooting apparatus of the terminal. Depending on different performances of the shooting apparatus, the collected image content may be different. The image content is not limited to a specific content collection capability of the shooting apparatus, but should be considered as any content that can be collected by an existing shooting apparatus. Specifically, the image content may include an object, such as a human, an animal, an article, or a plant, or may include a natural phenomenon, such as rain, fog, or sunset.

The image shooting apparatus may be a camera included in the terminal, such as a smartphone. In this manner, an existing resource is used, so that image shooting may be more convenient and fast. Alternatively, the terminal may be connected to an external shooting apparatus in a wired or wireless manner, such as a drone (that is, an external shooting apparatus) connected to the terminal in a wireless manner.

A room member is an entity of transmitting and receiving information in an information exchange virtual room. Only an information exchange virtual room including room members can perform information exchange. The room member is a virtual object, and the action of the room member may be controlled by one or more control objects. The control object herein may be a real user, or may be another type of virtual object in a special scenario (for example, a test or an experiment scenario). In this embodiment of the present disclosure, the image region on the user operation page displays a member image of a room member, and content of a member image displayed for a room member is not limited. For example, if the member image is a human image, a quantity of persons in any member image is not limited. In an application scenario, content of a member image may be flexibly adjusted, according to an actual requirement, by a control object controlling room members, and is not described herein.

The information exchange virtual room may include several room members, so that exchange of information such as video, voice, or text may be performed between the room members. The information exchange virtual room is relatively private, so that data of information exchange in the room is not directly disclosed to all users. To view the content of the information exchange virtual room, one should enter the information exchange virtual room first. Specifically, a manner of entering the information exchange virtual room is related to a private degree of the information exchange virtual room. The private degree of the information exchange virtual room depends on a scenario where the information exchange virtual room is applied. For example, to enter a public information exchange virtual room on the Internet, such as a live game room (or a live game playback room) or a live shopping room (or a live shopping playback room), one may directly enter the information exchange virtual room by using a public entering channel of the information exchange virtual room. It is better for this kind of information exchange virtual room to have more members, so that the private degree is relatively low.

A relatively private information exchange virtual room, such as an audio and video conversation room, a live studying room, and a conference room that are open only to some users, is set for some members, and has a relatively high private degree. Specifically, in creating the information exchange virtual room, a creator may preselect members that can enter the room. Alternatively, a member in the information exchange virtual room may select another member that can enter the room. In this case, in determining whether a member requesting to enter the room is an acceptable member, the information exchange virtual room may directly identify a member identifier of the member requesting to enter the room, or may identify a member identifier and verification information corresponding to the member identifier (for example, a password, a fingerprint, or a face of an account corresponding to the member).

In addition, verification information may be set for the information exchange virtual room. The verification information may include a room identifier (such as a room number, a room two-dimensional code, or a room name), and a room password (such as a set character password or picture password). Verification may be performed by using one type of verification information or a combination of multiple types of verification information. When a member wants to enter the information exchange virtual room, he may input verification information on an entering page. When verification succeeds, the member can enter the room.

Based on application scenarios of the information exchange virtual room, the manner of entering the room may be flexibly set in practices. Generally, a higher private degree of the information exchange virtual room requires more verification information for entering the information exchange virtual room. In addition, based on conditions of the application scenario or requirements for the private degree of the information exchange virtual room, the information exchange virtual room may be operated based on the Internet, or may be operated based on a local region network or a wide region network, which is specifically set in actual applications, and is not limited herein.

The user operation page may be a main page in the information exchange virtual room. The user operation page may include an image region and a function region. The image region may include a preview image of the information exchange virtual room before shooting is performed. The preview image may present an image effect to a user, and adjust (for example, adjust a shooting angle, adjust a function control, or adjust a shooting object) the image effect in a timely manner, so as to shoot an image that better meets the member's expectation.

The preview image may include a preview picture of a to-be-shot image, and the preview image includes at least two member images. The member image may be obtained based on an image collected by a shooting apparatus on a terminal of a room member, and may include some or all image information of the collected image. A quantity of image information included in the member image may be set according to an actual requirement. For example, if a member image in the preview image is used as a background of the preview image, the member image may include all image information of the collected image. For another example, if two member images in the preview image are used as main parts of the preview image, the collected image may be processed according to a rule (the rule may be preset, or may be selected by a member of the room), so that some image information of the collected image is retained to obtain a member image, and the member image is displayed on the preview picture. The conversion of the collected image to the member image may depend on an operation of a room member corresponding to the member image.

Display of the member image on the preview picture may be determined according to a member image display policy. Preview images obtained according to different member image display policies are different. Specifically, the member image display policy may be preset, or may be set by a room member in the information exchange virtual room. For example, the member image display policy may be preset (for example, the preset member image display policy is shooting a group photo) by an application to which the information exchange virtual room belongs, and each member image includes a human image, so that the obtained preview image may include human images of all member images.

The function region may include several function controls. The function control may include an effect control for adjusting and optimizing a preview image. For example, the function control may include a control for adjusting resolution, aperture, or ISO, or a control for adjusting a shooting mode such as a portrait mode, a landscape mode, or a night mode. For example, when a shooting object of a member is a person, the portrait mode may be enabled to achieve a better shooting effect.

The function region may also include a shooting control for performing a shooting operation. The shooting control may be a button, a text box, or the like, and triggering of the button may include tapping (such as long press or double click), or sliding. The shooting control may have multiple types, and may include a commonly used trigger shooting control, which may be manually triggered on a page to perform shoot; or may be a touching shooting control, which may be an image region manually triggered on a page to perform shoot, and the like.

Some intelligent shooting controls, such as a voice shooting control or a smile shooting control may be included. Voice shooting may be based on a set voice. The set voice may include a specific voice (such as "shooting" in Mandarin) or an unspecific voice (for example, any sound that can be received by the terminal and that is greater than a specific decibel). Specifically, after a member triggers the voice shooting control, the terminal automatically triggers the image shooting after receiving the voice that meets the preset voice condition.

The smile shooting control may be used to automatically trigger shooting when a preset number of times of smiling is detected in a preview picture. In addition, the preset number of times may be flexibly set. In addition to the smile shooting, eye-opening shooting and heart-sign shooting may be set according to an actual application requirement. Alternatively, two or more actions (for example, a smile and a heart sign) may be all required for triggering the shooting.

Some shooting manner setting controls may be included, such as a shortcut shooting setting control, a continuous shooting setting control, or a countdown shooting setting control.

The client may be an application client on the terminal. The application may include an information exchange virtual room, and each room member of an information exchange virtual room may view a user operation page of the information exchange virtual room displayed through a client on a terminal of the room member. The preview images displayed on the user operation pages for all the room members are the same. The preview image includes member images of all room members. Before displaying the member image in the preview image, it may be determined, according to a member image display policy, how to display each member image, where a quantity of room members is at least two.

A preview image is displayed in an image region of a user operation page, and the preview image includes at least two member images. In this case, the preview image may display image content that is actually not in the same real space together, and different preview images may be presented based on different member image display policies. For example, a group photo of three family members in different real spaces may be shot. In this embodiment, in spite of the geographic distances, different member images are placed in the same preview image by technology, thereby significantly improving interestingness of image shooting.

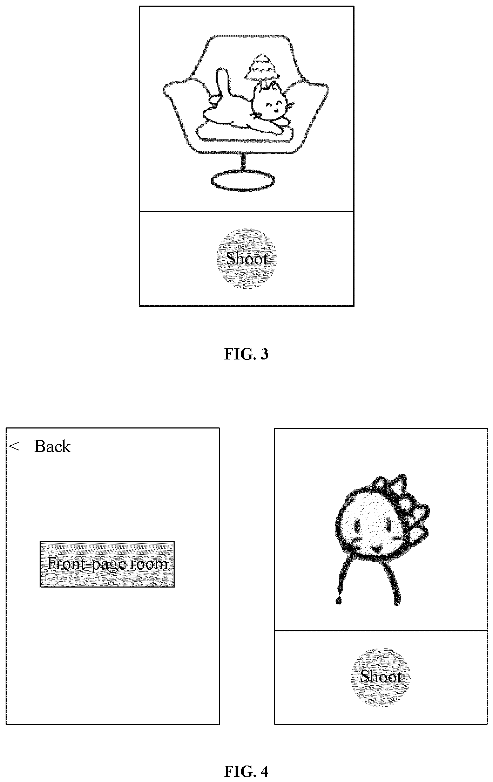

For example, an information exchange virtual room in a shooting application includes three room members: Xiao A, Xiao B, and Xiao C. A member image obtained by using a shooting application client of Xiao A is a chair, a member image obtained by using a shooting application client of Xiao B is a pine tree, and a member image obtained by using a shooting application client of Xiao C is a cat. A preview image is displayed on a user operation page of each of Xiao A, Xiao B, and Xiao C, and the preview image includes the foregoing three member images. A member image display policy is determined by Xiao A, Xiao B, and Xiao C. As shown in FIG. 3 which is a user operation page of Xiao A, the user operation page includes an image region and a function region, display content of a preview image included in the image region is a cat sitting on a chair and having a pine tree on the head, and the function region includes a shooting control.

In an embodiment, the step of "displaying a user operation page of an information exchange virtual room on a client" may include:
displaying a room setting page provided by a client, the room setting page including a room creation control; and displaying the user operation page of the created information exchange virtual room in response to a trigger operation through the room creation control.

The room setting page may include a control for setting related information of the information exchange virtual room.

For example, the room setting page may include a room creation control used for creating an information exchange virtual room. The room creation control may be a button, an input box, or the like. A room member who wants to create an information exchange virtual room may create an information exchange virtual room by triggering the room creation control. After creation, a user operation page of the information exchange virtual room may display a room setting control, and a room setting page may be displayed by triggering the room setting control. The room setting page may include related information (such as a room identifier) of the created information exchange virtual room, and may further include several function controls for setting the created information exchange virtual room, such as a name input control for setting a name of the information exchange virtual room, a control for adjusting a user operation page of the information exchange virtual room, an operation page adjustment control for adjusting a display proportion and a quantity of regions, and a style control for changing a display style of the information exchange virtual room.

In addition, the function controls in the room setting page may be automatically set by the client or manually set by a room member in the information exchange virtual room according to actual use frequency or the like, so that some function controls that have high use frequencies or that are important to a room user are placed on the user operation page.

The room setting page may be displayed on the client of the terminal of the room member. The room setting page may include a room creation control. After the room member triggers the room creation control, the terminal receives the trigger operation, creates an information exchange virtual room according to the trigger operation, and displays a user operation page of the information exchange virtual room on the client. In this case, the user operation page displays a member image that includes the room member who creates the room.

The client includes a room creation control for creating an information exchange virtual room. Any room member of an application to which the client belongs may create an information exchange virtual room according to a requirement, and perform an operation in the information exchange virtual room.

For example, FIG. 4 is a schematic diagram of a page operation of creating an information exchange virtual room. Xiao A wants to create an information exchange virtual room. On a room setting page of a shooting application client, Xiao A taps a room creation control in a button form (a room creation button in the figure), so that the shooting application creates an information exchange virtual room for Xiao A and displays a user operation page of the created information exchange virtual room on the client of the shooting application. The user operation page includes a member image (a girl) of Xiao A.

In an embodiment, the step of "displaying the user operation page of the created information exchange virtual room in response to a trigger operation through the room creation control" may include:

displaying an authentication control in response to the trigger operation through the room creation control; and setting authentication information for the created information exchange virtual room and displaying the user operation page of the created information exchange virtual room, when detecting that a setting operation through the authentication control is.

The authentication control may be displayed in a form of a button or an input box. The authentication control may have various display form and encryption forms. For example, the authentication control may be a password setting control which may be in a form of an input box. A user who wants to create an information exchange virtual room may input a character password (for example, a character password in a form of numbers, symbols, words, or letters) in the password setting control. After receiving the character password inputted by the user, the client sets the character password as a password of the information exchange virtual room.

For another example, the authentication control may be a password selection control. To quickly set a password for the information exchange virtual room, the application may preset several preset passwords. The password selection control may include several buttons of password setting options. When the user performs encryption setting, the user simply selects a target preset password from the several preset passwords displayed in the password selection control, to complete an encryption setting operation. The application automatically sets the target preset password selected by the user as the password of the information exchange virtual room.

In addition, the authentication control may be in a button form, such as an encryption button. After the user triggers the encryption button, the client may set a verification condition for the information exchange virtual room. The verification condition may be in multiple forms, such as question verification and restriction verification. The question verification may include a question that another user needs to answer when entering the room. The question may be, for example, a nickname of a creator of the information exchange virtual room. In this case, the answer to the question is the password. The password and the question may be automatically generated by the client, or may be set by the creator.

The restriction verification may include that the information exchange virtual room can be entered only by using an entering invitation link transmitted by the creator of the information exchange virtual room. The entering invitation link may have a time limitation, so as to further enhance privacy of the information exchange virtual room. A password in this encryption manner is set by the terminal, password verification is integrated into the tapping on the entering invitation link, and the user does not need to perform a verification operation, leading to a simplified operation.

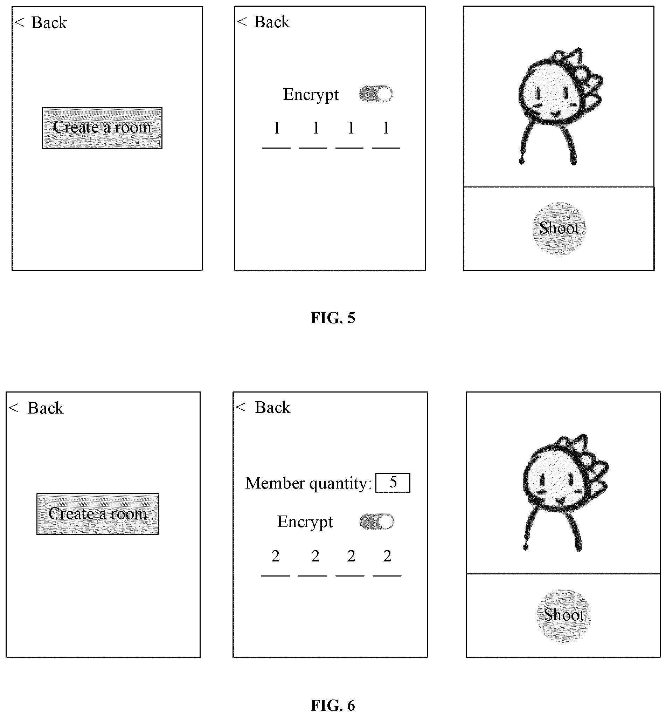

As shown in FIG. 5, Xiao A wants to create an information exchange virtual room. On a room setting page of a shooting application client, if Xiao A taps a room entering control in a button form, the shooting application client displays an authentication control (the encryption button and the password input box in the figure). After Xiao A triggers the encryption button and inputs a preset password (such as 1111 in the figure) in the password input box, the shooting application sets the characters collected from the input box as a password of the information exchange virtual room, and displays a user operation page of the created information exchange virtual room. The user operation page includes a member image of Xiao A.

In an embodiment, the step of "displaying an authentication control in response to the trigger operation through the room creation control" may include: displaying a room member quantity control and the authentication control in response to the trigger operation through the room creation control, the room member quantity control being configured to set a quantity threshold of room members in the information exchange virtual room.

The quantity threshold of room members is a maximum quantity of room members that can enter the information exchange virtual room.

In an embodiment, the displaying a room member quantity control and the authentication control in response to the trigger operation through the room creation control includes: displaying the room member quantity control in response to the trigger operation through the room creation control; and setting the quantity threshold of room members in the created information exchange virtual room and displaying the authentication control, when detecting that a setting operation through the room member quantity control is completed.

In this embodiment, the room member quantity control and the authentication control may be displayed at the same time, that is, the room member quantity control and the authentication control are displayed in response to the trigger operation through the room creation control. In addition, it is to be understood that any display sequence of various controls to be implemented is possible in the embodiments, and may be flexibly set according to an actual requirement. Details are not described herein.

The room member quantity control may be used for setting a maximum value for the quantity of room members in the information exchange virtual room, and when an information exchange virtual room is created, a maximum value of a quantity of room members in the information exchange virtual room may be set based on a personalized requirements of room members or an objective condition (such as data processing performance of a computer device or a network status).

The room member quantity control may be in various forms, which may be an input box, where the creator of the information exchange virtual room may directly input a value, and the client may limit the input value by, for example, not displaying an unacceptable value; or may be a data selection control, which may include several selectable values defined by the client and provided to the creator for selection; or may be multiple number buttons, where several buttons are displayed on the client, each corresponding to a value, and the creator can tap a selected button.

Setting the room member quantity control may make the solution more reliable in technical implementation, and also meets member requirement, thereby facilitating the online image shooting.

As shown in FIG. 6, Xiao A wants to create an information exchange virtual room. On a room setting page of a shooting application client, when Xiao A taps a room entering control in a button form, a room member quantity control (the room member quantity control is the quantity input box in the figure) and an authentication control (an encryption button and a password input box in the figure) are displayed. When an operation on the quantity input box (5 is inputted in the figure) by Xiao A is completed, the shooting application saves a value obtained from the quantity input box and sets the value as a quantity threshold of members in the information exchange virtual room. When an operation on the encryption button and the password input box (2222 is inputted in the figure) by Xiao A is completed, the shooting application saves characters obtained from the password input box and sets the characters as the password of the information exchange virtual room, and then displays a user operation page of the information exchange virtual room, the user operation page including a member image of Xiao A.

In an embodiment, the step of "displaying a user operation page of an information exchange virtual room on a client" may include: displaying a room entering page provided by the client, the room entering page including a room entry for created information exchange virtual rooms; and adding, in response to a trigger operation triggering the room entry, a room member identifier of the client to a specified information exchange virtual room, and displaying the user operation page of the specified information exchange virtual room.

The room entry is a trigger entry used for adding a member to the room.

In an embodiment, the room entry may be in one-to-one correspondence with the created information exchange virtual room. That is, each created information exchange virtual room corresponds to a unique room entry. In this way, the user may request to enter an information exchange virtual room by triggering a room entry of the information exchange virtual room, instead of inputting a specific room identifier.

In an embodiment, multiple created information exchange virtual rooms may correspond to one room entry. For example, all created information exchange virtual rooms may be corresponding to one room entry. Alternatively, some created information exchange virtual rooms may be corresponding to one room entry, so that all created information exchange virtual rooms are corresponding to at least two room enter entries. The correspondence between the room entry and the created information exchange virtual room is not limited herein.

In an embodiment, the room entry may include a room entering control and a room identifier input control. That is, the room entering control and the room identifier input control may be displayed together in the room entry. The user can specify the room identifier to be entered in the room identifier input control, and then trigger the room entering control to request to enter the information exchange virtual room.

In an embodiment, the room entry may include a room entering control. The adding, in response to a trigger operation triggering the room entry, a room member identifier of the client to a specified information exchange virtual room, and displaying the user operation page of the specified information exchange virtual room includes:

displaying a room entering page provided by a client, the room entering page including a room entering control of the created information exchange virtual room; displaying a room identifier input control when a trigger operation through the room entering control is detected; and adding, based on an input operation through the room identifier input control, the room member identifier of the client to an information exchange virtual room corresponding to an inputted room identifier, and displaying a user operation page of the entered information exchange virtual room.

The room entering page may provide an interface for a user who wants to enter a created information exchange virtual room to enter the room. The room entering interface may be in various forms. For example, the room entering page may include interfaces of several recommended information exchange virtual rooms. A newcomer (that is, a user who wants to enter a created information exchange virtual room) may tap, according to introduction information of a recommended room (that is, a recommended information exchange virtual room), an interface of a selected recommended room to enter the selected recommended room. The recommended information exchange virtual room may include an information exchange virtual room that has a special member image display policy (for example, the member image display policy may be used for obtaining an interesting or a good-looking preview image), or an information exchange virtual room that includes a specific member image (for example, the member image may include a well-known person or an unusual natural view). Therefore, a more interesting preview image may be obtained, thereby significantly improving interestingness of image shooting.

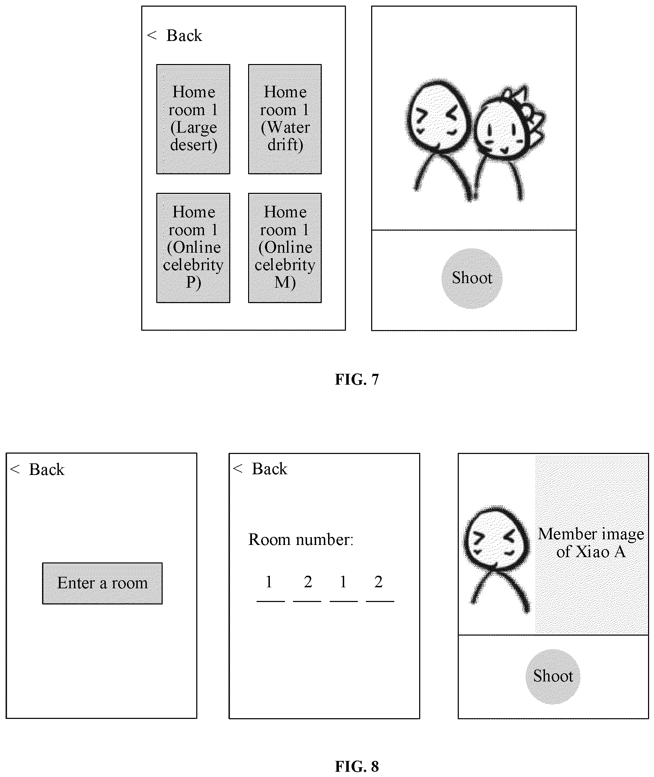

As shown in FIG. 7, Xiao B wants to enter an information exchange virtual room to shoot a creative image. A room entering page includes four front-page rooms (that is, recommended information exchange virtual rooms). Xiao B taps front-page room 4, and may be shot a photo with online celebrity M in front-page room 4. A preview image of room 4 includes objects of the online celebrity M (the girl in the preview image) and Xiao B (the boy in the preview image).

For another example, the room entering interface may include a room entering control. When the newcomer triggers the room entering control, the client of the shooting application displays a room identifier input control, determines, based on an input operation of the newcomer for the room identifier input control, an information exchange virtual room corresponding to an inputted room identifier, adds a room member identifier of the newcomer to the information exchange virtual room corresponding to the inputted room identifier, and displays a user operation page of the information exchange virtual room. By setting the room entering control, the newcomer can conveniently enter the information exchange virtual room, thereby facilitating the image shooting.

As shown in FIG. 8, Xiao B wants to enter an information exchange virtual room. Xiao B triggers a room entering control (the room entering button in the figure) on a room entering page, and displays a room identifier input control (a text "room number" and a character input box in the figure). When an input operation of Xiao B for the room identifier input control is completed, Xiao B enters an information exchange virtual room corresponding to the room identifier, and the shooting application client displays a user operation page of the information exchange virtual room. The user operation page includes a member image of previously entered Xiao A and a member image of Xiao B (the member image of Xiao B is a boy).

In an embodiment, the step of "adding, based on an input operation through the room identifier input control, the room member identifier of the client to an information exchange virtual room corresponding to an inputted room identifier, and displaying a user operation page of the entered information exchange virtual room" may include:

displaying, based on the input operation through the room identifier input control, an authentication information input control of the information exchange virtual room corresponding to the inputted room identifier; and adding, in a case that authentication information inputted through the authentication information input control passes verification, the room member identifier of the client to the information exchange virtual room corresponding to the room identifier, and displaying a user operation page of the information exchange virtual room.

The authentication information input control may be used for verifying a newcomer, or may be used for verifying password information of an information exchange virtual room to which the newcomer wants to enter. For example, if a creator of an information exchange virtual room presets a preset room member that is allowed to enter this information exchange virtual room, when the newcomer completes an input operation through a room identifier input control, the application client may determine, according to an inputted room identifier, the information exchange virtual room to which the newcomer wants to enter. If the newcomer is a preset room member, to verify whether the operation object operating the client is the owner of the newcomer, it is required to verify the operation object by using an authentication information input control. The authentication information input control may prompt the operation object to input information, and receive password, fingerprint, face, or fingerprint information that is inputted by the operation object and that can be used for identity verification. The application client then processes the information to obtain a conclusion. If the conclusion indicates that the operation object is the owner of the newcomer, the application client may determine that the newcomer passes the verification, and display the user operation page of the information exchange virtual room.

For another example, the authentication information input control may be used for verifying password information of the information exchange virtual room to which the newcomer wants to enter. For example, the authentication information input control may receive inputted authentication information such as a password of the information exchange virtual room to which the newcomer wants to enter, or a question answer that is used for verification. When the inputted authentication information passes verification, the newcomer may enter the information exchange virtual room, and the client may display a user operation page of the information exchange virtual room.

The authentication information input control receives the inputted authentication information, and performs verification according to the inputted authentication information, thereby effectively improving security of an information exchange virtual room that has an encryption requirement.

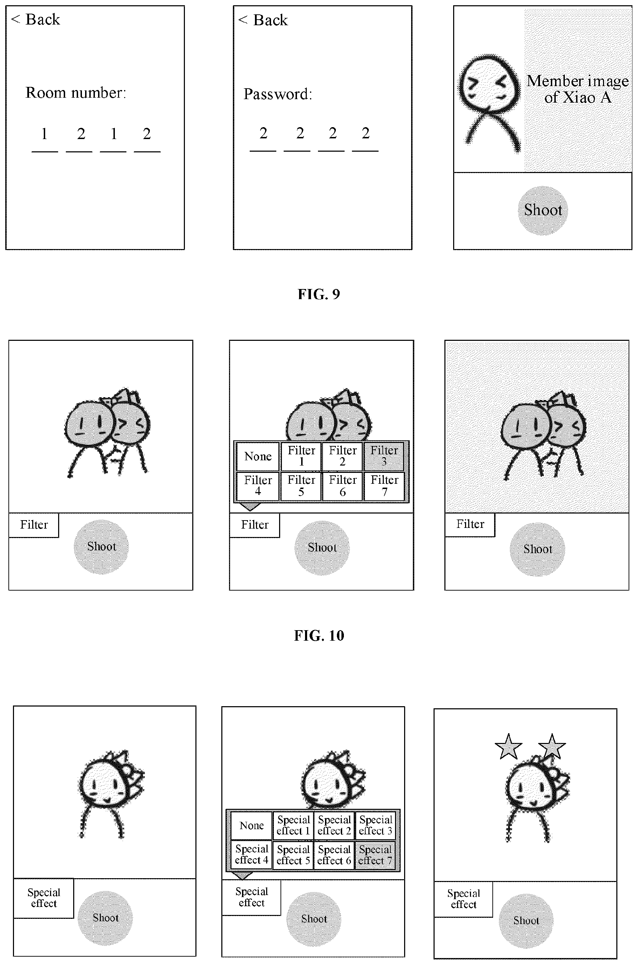

For example, in FIG. 9, when Xiao B completes an input operation (room number 1212 inputted in the figure) on a room identifier input control (a text "room number" and a character input box in the figure), an authentication information input control (a text "password" and a character input box in the figure) is displayed. When Xiao B completes an input operation on the authentication information input control (password 2222 is inputted in the figure), and passes verification, Xiao B enters an information exchange virtual room corresponding to the inputted room identifier, and the shooting application client displays a user operation page of the information exchange virtual room. The user operation page includes a member image of previously entered Xiao A and a member image of Xiao B (the member image of Xiao B is a boy).

In an embodiment, the image region includes at least two image sub-regions, and the step of "displaying a user operation page of an information exchange virtual room on a client" may include:
acquiring a mapping relationship between the image sub-regions and the room members; and displaying the user operation page of the information exchange virtual room based on the mapping relationship, the user operation page including an image region, the image region including at least two image sub-regions, and a preview image in the image sub-region including a member image of a room member corresponding to the image sub-region (that is, having a mapping relationship).

The image sub-region is a part of the image region. The image sub-region corresponds to a member object. The mapping relationship is a relationship between the image sub-region and the room member. Each member image belongs to one room member. Therefore, for each member image, an image sub-region corresponding to the member image can be determined by using the mapping relationship. The image region includes the image sub-regions, and includes a preview image. Therefore, the preview image is formed by member images. A relative location of the image sub-region in the image region and a first mapping relationship between the image sub-region and the room member may be set by the application client, or may be set by a room member in the information exchange virtual room, or in other ways.

The application client may determine a relative location of the image sub-region in the image region according to a preset display mode, such as a multi-grid mode (all image sub-regions have the same area and the same shape, and there is no overlapping part between any two image sub-regions) or a same-screen mode (there may be overlapping part between image sub-regions), and a quantity of room members, and then determine a first mapping relationship between the room member and the image sub-region according to a time point at which the room member enters the information exchange virtual room.

For example, if the preset display mode is the multi-grid mode, and room members includes Xiao A (the creator) and Xiao B, that is, the quantity of room members is 2, then the left half of the image region is allocated as an image sub-region of Xiao A, and the right half of the image region is allocated as an image sub-region of Xiao B. If the preset display mode is the same-screen mode, and room members include Xiao A (creator) and Xiao B, that is, the quantity of room members is 2, then the left 2/3 of the image region may be allocated as an image sub-region of Xiao A, and the right 2/3 of the image region is allocated as an image sub-region of Xiao B, so that the middle 1/3 of the image region is an overlapped part of the image sub-region of Xiao A and Xiao B. Because Xiao A is the creator, when image content of the member images is overlapped at the middle 1/3, the member image of Xiao A is placed on the upper layer.

The relative location of the image sub-region in the image region and the first mapping relationship between the image sub-region and the room member are determined based on settings of a room member, which may be implemented by setting a related control in the information exchange virtual room by the room member. In this manner, personalized requirements of the room members are better met, and the room member can enjoy more freedom to play, thereby increasing interestingness of the presented preview image, that is, increasing interestingness of image shooting.

202. When a trigger operation through the shooting control is detected, image shooting is performed on the preview image.

The trigger operation through the shooting control may include different types of trigger operations. The trigger operation depends on the shooting control. For example, when the shooting control is a trigger shooting control, tapping the trigger shooting control is the trigger operation. When the shooting control is an intelligent shooting control, the trigger operation may be a specific or non-specific voice, expression, or action. The terminal may perform image shooting on the preview image, when detecting a trigger operation corresponding to the shooting control.

When the trigger operation through the shooting control is detected, image shooting may be immediately performed on the preview image. Alternatively, when the trigger operation through the shooting control is detected, the image shooting may be performed on the preview image after a preset time period. The preset time period may be preset by a room user, or may be preset by the application. In addition, the image shooting may include shooting a single image, shooting multiple images, or shooting a video image. For example, the user operation page may include a trigger shooting control, a continuous shooting control, and a video recording control. The room user may select a corresponding control according to a personal requirement, and then the terminal may perform corresponding shooting according to the trigger operation.

Image shooting is performed on the preview image in response to the trigger operation, so that image content displayed in the preview image of the room member may be kept, so as to implement image shooting.

For example, a user operation page of Xiao A includes an image region and a function region, and display content of a preview image in the image region is a cat sitting on a chair and having a pine tree on the head, and the function region includes a shooting control. When a trigger operation on the shooting control by Xiao A is detected, the shooting application performs image shooting on the preview image.

203. An image obtained by the image shooting is outputted.

The outputting the image obtained by the image shooting (which may be referred to as a target image) may be saving the target image to terminals installing the application of all room members of the information exchange virtual room. The room member may view the target image on the terminal. An interface (such as a button) for directly viewing the shot target image may be configured on a page of the information exchange virtual room. Alternatively, the target image may be displayed on the page of the information exchange virtual room, and a saving control is set on the page displaying the target image, so that the room member can conveniently save the target image.

For example, after the shooting control is triggered by Xiao A, the shooting application displays the shot image on the page of the information exchange virtual room, so as to facilitate viewing by Xiao A.

In an embodiment, the user operation page further includes a preview image effect control, and the image shooting method may further include the following step:
applying an image effect on the preview image based on an operation through the preview image effect control.

In this embodiment, the step of "performing image shooting on the preview image when a trigger operation through the shooting control is detected" may include:
performing, when the trigger operation through the shooting control is detected, image shooting on the preview image applied with the image effect.

The applying the image effect may include modifying display content in the preview image to obtain a more interesting, personal, and beautiful preview image. The modified display content may include multiple aspects, such as a tone, a filter, a display special effect, or a background of the entire preview image. Alternatively, a part of the preview image may be modified. For example, an object in the preview image is modified.

The preview image effect control may include a control set formed by several controls. The controls in the control set may be in a parallel relationship or a progressive relationship. A setting manner and a display manner of the controls may be flexibly configured according to actual requirements.

The preview image effect control for the preview image are provided so that the room member can perform more personalized modification and operation on the preview image, thereby improving interestingness of image shooting.

For example, referring to FIG. 10, a function region of a user operation page includes a preview image effect control (a filter button in the figure) for a preview image. After a room user Xiao A performs a trigger operation on the filter button, preset filter buttons (filter 1 to filter 7 in the figure) are displayed on the user operation page. After the filter 3 is selected by Xiao A, a preview image in the image region of the user operation page is applied with an image effect corresponding to the filter 3.

In an embodiment, to further improve interestingness of image shooting and meet a requirement for setting a personalized image effect of the preview image, the preview image effect control includes a member image effect control, and the step of "applying an image effect on the preview image based on an operation through the preview image effect control" may include:
displaying, based on a setting operation through the member image effect control, an effect range control corresponding to an inputted target member effect; and applying, when detecting that a setting operation through the effect range control is completed, an image effect corresponding to the target member effect to a member image corresponding to the setting operation through the effect range control.

The member image effect control may include a control used for modifying a member image in the preview image, or may include a control used for modifying an object in the member image, and the like. The member image effect control is a type of the preview image effect control. Therefore, similar to the preview image effect control, the member image effect control may include a control set formed by several controls. The controls in the control set may be in a parallel relationship or a progressive relationship. A setting manner and a display manner of the controls may be flexibly configured according to actual requirements.

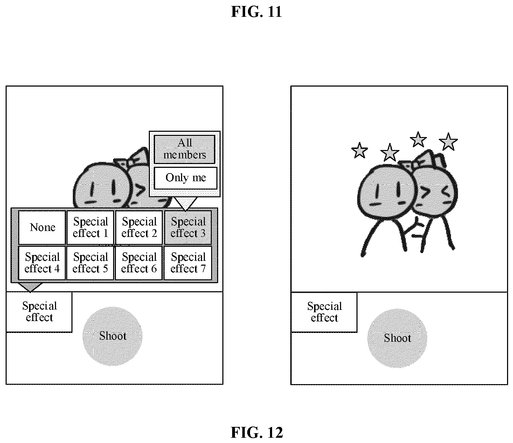

For example, referring to FIG. 11, a function region of a user operation page includes a member image effect control (a special effect button in the figure) for a preview image. After a room user Xiao A performs a trigger operation on the special effect button, preset special effect buttons (a special effect 1 to a special effect 7 in the figure) are displayed on the user operation page, and after Xiao A performs a selection operation on the special effect 7, an object (a girl) in the preview image in the user operation page is applied with an image effect corresponding to the special effect 7 (two pentagrams on the girl's head).

In an embodiment, the effect range control includes at least one of an all-member control, a partial-member control, and a local-member control.

In an embodiment, to further improve a personalized image effect in image shooting, the effect range control includes an all-member control, and the member image includes a local member image collected by a local terminal in real time. The step of "applying, when detecting that a setting operation through the effect range control is completed, an image effect corresponding to the target member effect to a member image corresponding to the setting operation through the effect range control" may include:
applying the image effect corresponding to the target member effect to all the member images in the image region in a case that a selection operation selecting the all-member control is detected.

In an embodiment, the effect range control includes a partial-member control. The step of "applying, when detecting that a setting operation through the effect range control is completed, an image effect corresponding to the target member effect to a member image corresponding to the setting operation through the effect range control" may include:
applying the image effect corresponding to the target member effect to a selected member image in the image region in a case that a selection operation selecting the partial-member control is detected.

In an embodiment, the effect range control includes a local-member control. The step of "applying, when detecting that a setting operation through the effect range control is completed, an image effect corresponding to the target member effect to a member image corresponding to the setting operation through the effect range control" may include:
applying the image effect corresponding to the target member effect to the local member image in the image region in a case that a selection operation selecting the local-member control is detected.

For example, referring to FIG. 12, after a display operation of Xiao A (a member image of Xiao A is the girl in the figure) for a member image effect control (a special effect 3 button in the figure) is completed, a shooting application client displays an all-member control (the all member button in the figure) and a local-member control (the only me button in the figure). When Xiao A selects the all member button, the shooting application client applies the image effect (two pentagrams on the girl's head and two pentagrams on the boy's head) corresponding to the special effect 3 to the objects (the girl and the boy) in the preview image of the user operation page.

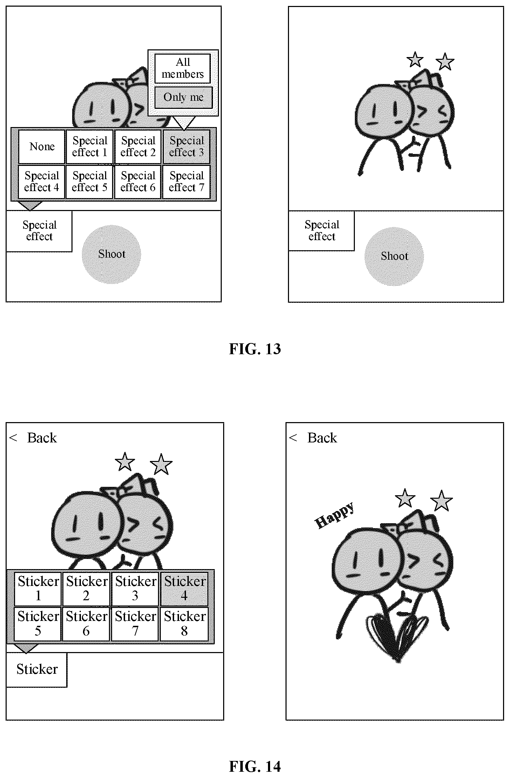

For example, referring to FIG. 13, after a display operation of Xiao A (the girl in an object image in a member image of Xiao A) for a member image effect control (a special effect 3 button in the figure) is completed, a shooting application client displays an all-member control (the all member button in the figure) and a local-member control (the only me button in the figure). When Xiao A selects the only me button, the shooting application client applies the image effect (two pentagrams on the girl's head) corresponding to the special effect 3 to the member image of Xiao A (the girl) in the preview image of the user operation page.

In an embodiment, the outputting an image obtained by the image shooting includes:
displaying an image preview page, the image preview page including the image obtained by the image shooting and an image editing control; and displaying, in real time on the image preview page, an effect of editing the image obtained by the image shooting, based on an editing operation through the image editing control by the room member.

In this embodiment, outputting an image obtained by the image shooting may be displaying an image preview page on a page of an information exchange virtual room, the image preview page includes the image obtained by the image shooting and an image editing control, and the image editing control may be used to edit the image obtained by the image shooting. For example, graffiti and stickers may be applied to the image. Different editing manners may correspond to different image editing controls. In this case, all room members in the information exchange virtual room may perform an editing operation. In addition, editing operations of all room members are displayed in real time on a user operation page of each room member. After an operation is completed, each room member may save the edited image. The image editing control is provided so that the room members can edit the shot image at the same time, which greatly improves interaction and interestingness of image shooting.

For example, referring to FIG. 14, after Xiao A triggers an image editing control (the sticker button in the figure) on an image preview page, preset sticker buttons (sticker 1 to sticker 7 in the figure) are displayed on the image preview page. After Xiao A selects the sticker 4, the sticker 4 is displayed on the page ("happy" in the figure). In addition, when Xiao A performs an operation, a room member Xiao C in the information exchange virtual room also performs image editing, and an operation of Xiao C is displayed on the image preview page in real time (heart graffiti in the figure).

In an embodiment, an image preview page may be displayed after the shot image is outputted. For example, after the shot image is outputted, the user may perform an image preview operation to trigger display of the image preview page.

In an embodiment, the image shooting method further includes the following steps:
acquiring an image collected in real time by a local terminal; extracting a local member image in the real-time collected image and location information of the local member image in the real-time collected image; transmitting the local member image and the location information of the local member image to a server; and receiving a preview image returned by the server based on the local member image and the location information of the local member image, the preview image including member images of at least two room members.

The local member image may include an image obtained by processing the image collected in real time by the local terminal. The local member image includes content that the room member of the terminal wants to display in the preview image. Specifically, the local member image may be extracted from the real-time collected image. It may be determined, according to an actual environment and a shooting requirement, how to extract the image. If it is required to retain the real-time collected image, the real-time collected image may be directly used as a local member image without performing extraction, or the real-time collected image may be modified. For example, only an object (such as a person or an article) in the real-time collected image is retained as a local member image, or an image obtained by deleting some content in the real-time collected image is used as a local member image. How to extract the image may be flexibly set by a room member of the terminal.

For example, for room member Xiao C in an information exchange virtual room, a terminal of Xiao C collects an image in real time, and the real-time collected image may include an object. The terminal may extract a local member image (which may be an image of the object) from the real-time collected image, determine location information of the member image in the real-time collected image, and then transmit the local member image and the location information to a server. The server may determine a sub-region for the room member, and after receiving the member image and the location information of the member image in the information exchange virtual room, determine, in the sub-region, a location of the member image in the preview image according to the location information, and render the member image at the location. Then, the server returns the preview image in which the member image is rendered to the terminal, and the terminal displays the image in the image region of the user operation page.

In addition, the terminal of Xiao C may also directly receive a member image of another room member in the information exchange virtual room and location information of the member image, determine a corresponding sub-region for each room member, determine a location of each member image, including the local member image, in the preview image according to a relative location of the image, render the image to obtain the preview image, and display the preview image in the image region of the user operation page.

This embodiment of the present disclosure first displays a user operation page of an information exchange virtual room on a client, where the user operation page includes a shooting control and an image region, a preview image being displayed in the image region, and the preview image includes member images of at least two room members. When a trigger operation through the shooting control is detected, image shooting is performed on the preview image, and finally an image obtained by the image shooting is outputted. In the solution of the present disclosure, an information exchange virtual room is used as an intermediary, so that at least two room members can perform image shooting in a same preview image.

According to the method described in the foregoing embodiments, examples are described in detail below.

In this embodiment, an example that a member image is a human image and an information exchange virtual room has three room members are used to describe an image shooting method in detail.

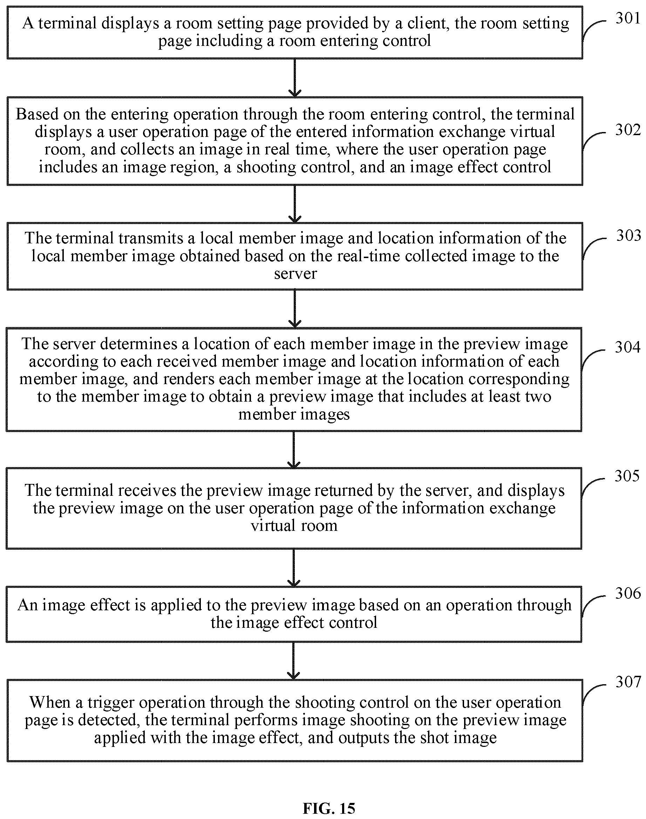

An embodiment of the present disclosure provides an image shooting method. As shown in FIG. 15, a procedure of the image shooting method may be as follows.

301. A terminal displays a room setting page provided by a client, the room setting page including a room entering control.

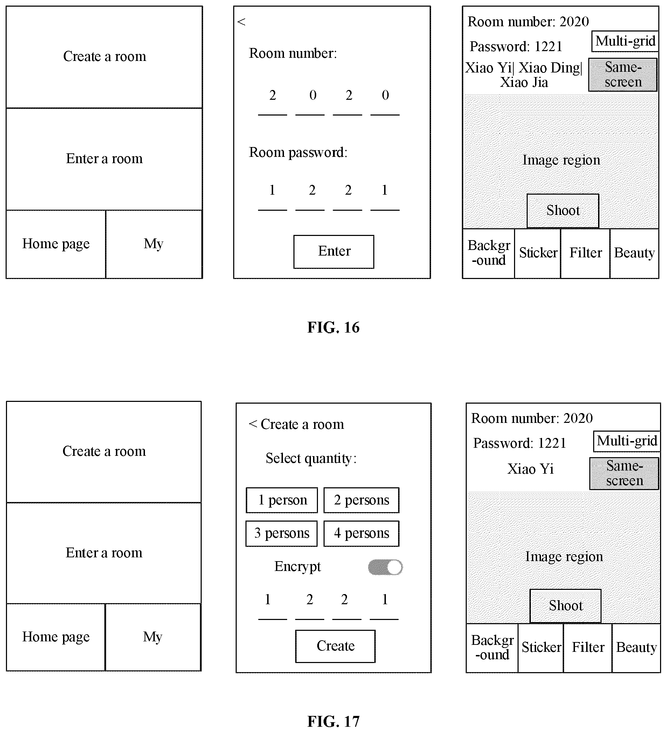

For example, FIG. 16 shows a room setting page provided by a client, which is a room setting page of user Xiao Jia of an application PP. The room setting page includes a room entering control (the entering room button in the figure), and further includes a create button used for creating a room, and a home button used for browsing the PP home page, and a "My" button used for browsing personal information of Xiao Jia. Xiao Jia wants to enter an information exchange virtual room created by Xiao Yi (Xiao Yi creates a head photo room, and the head photo room is a room in which voice can be made and a head photo can be shot).

302. Based on the entering operation through the room entering control, the terminal displays a user operation page of the entered information exchange virtual room, and collects an image in real time, where the user operation page includes an image region, a shooting control, and an image effect control.

For example, as shown in FIG. 16, if Xiao Jia triggers the entering room button, the PP client displays the room number and the room password input box. If Xiao Jia inputs 2020 in the room number input box, and inputs 1221 in the room password input box, and then Xiao Jia taps the OK button, the application PP determines that the entering operation of Xiao Jia is successful according to the information inputted by Xiao Jia, and displays the user operation page of the head photo room. The user operation page includes a first function region, a shooting control (the shooting button in the figure), a second function region, and an image region. The first function region includes room information of the head photo room ("room number: 2020", "password: 1221", "Xiao Yi|Xiao Ding|Xiao Jia" in the figure), and a mode control (the multi-grid button and the same-screen button in the figure). The second function region includes an image effect control (the background button, the sticker button, the filter button, and the beauty button in the figure). In addition, the application PP invokes a camera on a terminal where the application PP is installed, to collect an image in real time.

In some embodiments, the image shooting method may further include the following operations.

The terminal displays a room setting page provided by a client, the room setting page including a room creation control. The terminal displays a user operation page of a created information exchange virtual room based on a creation operation by the room creation control.

For example, if Xiao Yi wants to create a head photo room, as shown in FIG. 17, the room setting page of the application PP includes a room creation control (the room creation button in the figure). In this case, Xiao Yi can trigger the room creation button, and the PP client displays a person quantity selection control (four quantity buttons in the figure: 1 person button, 2 persons button, 3 persons button, and 4 persons button) and an authentication control (the encryption button and password input box in the figure). If Xiao Yi taps the 3 persons button and the encryption button and inputs 1221 in the password input box, Xiao Yi completes the operation of creating a head photo room. The application PP sets a room member quantity threshold to 3 and the password to 1221 for the room, generates a room number 2020 for the head photo room, and displays a user operation page of the head photo room.

303. The terminal transmits a local member image and location information of the local member image obtained based on the real-time collected image to the server.

For example, the application PP of Xiao Jia processes the collected image. The image includes a girl and an environment around the girl. The application PP extracts the girl image from the collected image as a member image, and determines location information of the girl on the collected image, and transmits the girl image and the location information of the girl image to the server.

304. The server determines a location of each member image in the preview image according to each received member image and location information of each member image, and renders each member image at the location corresponding to the member image to obtain a preview image that includes at least two member images.

For example, the server of the application PP sequentially (in a sequence of Xiao Yi, Xiao Ding, and Xiao Jia) receives member images and relative locations of three room members in the head photo room, determines a location of each room member on the preview image according to the same-screen mode selected for the head photo room and relative locations of member images of all room members, and renders each member image at the location corresponding to the member image to obtain a preview image.

305. The terminal receives the preview image returned by the server, and displays the preview image on the user operation page of the information exchange virtual room.

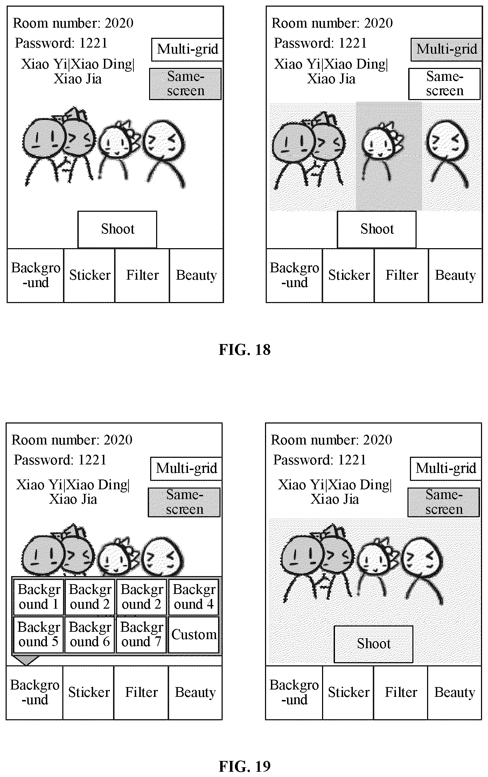

As shown in the left figure of FIG. 18, a preview image is displayed in an image region of a user operation page, which is a preview image in a same-screen mode (four objects of three room members in the figure are presented in a manner of side by side). If the mode is switched to a grid mode, as shown in the right figure of FIG. 18, a preview image in the grid mode is displayed (the member images of the three room members are presented in separated regions of the preview image).

306. An image effect is applied to the preview image based on an operation through the image effect control.

For example, referring to FIG. 19, the preview image includes a second function region that includes an image effect control (the background button, the sticker button, the filter button, and the beauty button in the figure). After Xiao Jia taps the background button, preset background buttons (background 1 to background 7 in the figure) and a custom button are displayed. Then Xiao Jia taps background 2, so that the background of the preview image is set to a color corresponding to background 2.

The effective range of the image effect control may be changed with a mode selected by a room user (a same-screen mode or a grid mode), or may be changed with a setting of the room user, which may be flexibly configured in practice.

307. When a trigger operation through the shooting control on the user operation page is detected, the terminal performs image shooting on the preview image applied with the image effect, and outputs the shot image.

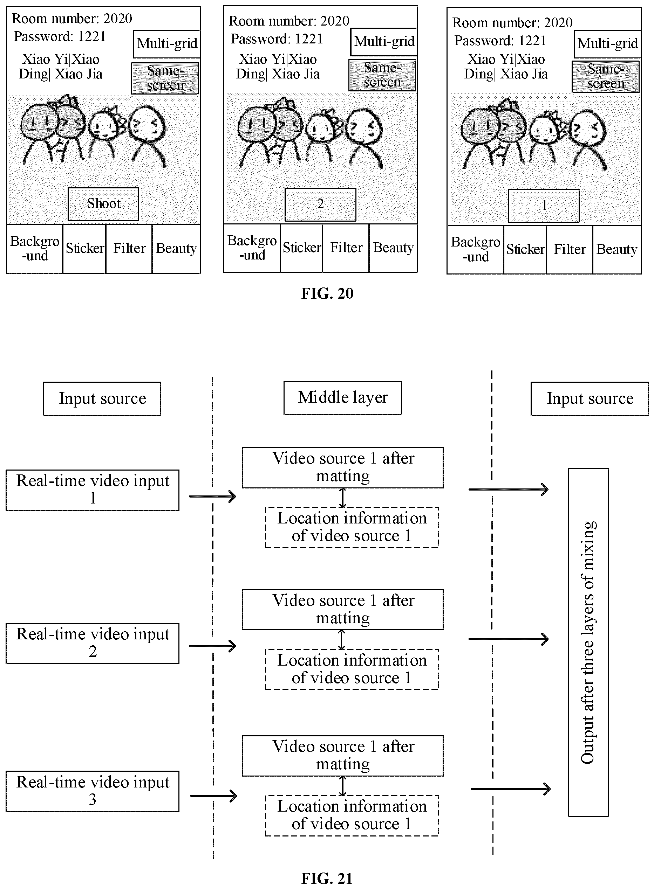

As shown in FIG. 20, a shooting control of the head photo room is a shooting button. If Xiao Jia taps the shooting button, a countdown is displayed on the preview image, and the PP image shooting is performed after the countdown ends, Then the shot image is displayed on a page of the head photo room. In addition, if Xiao Jia long presses the shooting button, the application PP may record a video, and finally output the recorded video.

In practices, the method may be implemented in various manners. For example, FIG. 21 provides an optional technology implementation. An input source may be a client of each room member. An image collection module on a client performs real-time video collection (a video includes several frames of images, for example, collected in real time), and matting processing is performed on the collected video at an intermediate layer to obtain a matted video (for example, matted processing is performed on a real-time collected image to obtain a local member image), and location information (for example, location information of the local member image in the real-time collected image) of the matted video in the collected original video is determined. Then, all matted videos and location information corresponding to the matted videos are inputted to an output layer, to be combined and outputted by the output layer as the preview image.

In this embodiment of the present disclosure, a terminal displays a room setting page provided by a client, and the room setting page includes a room entering control. Based on an entering operation performed on the room entering control, the terminal displays a user operation page of the entered information exchange virtual room, and collects an image in real time. The user operation page includes an image region, a shooting control, and an image effect control. The terminal transmits, to a server, a local member image and location information of the local member image that are obtained based on the real-time collected image. The server determines, according to each received member image and a relative location thereof, a location of each member image on a preview image, and renders each member image at the corresponding location, so as to obtain a preview image that includes at least two member images. The terminal receives the preview image returned by the server, displays the preview image on the user operation page of the information exchange virtual room, applies an image effect on the preview image based on the operation on the image effect control, and when detecting a trigger operation through the shooting control on the user operation page, the terminal performs image shooting on the preview image applied with the image effect, and outputs the image obtained by the image shooting.

In the present disclosure, the existing image shooting method is extended . Even if the objects are not in the same real space, the interesting image shooting can be performed through a network.

To better implement the image shooting method provided in the embodiments of the present disclosure, an embodiment of the present disclosure further provides an apparatus based on the foregoing image shooting method. Terms have meanings the same as those in the foregoing image shooting method. For specific implementation details, reference may be made to the description in the method embodiments.

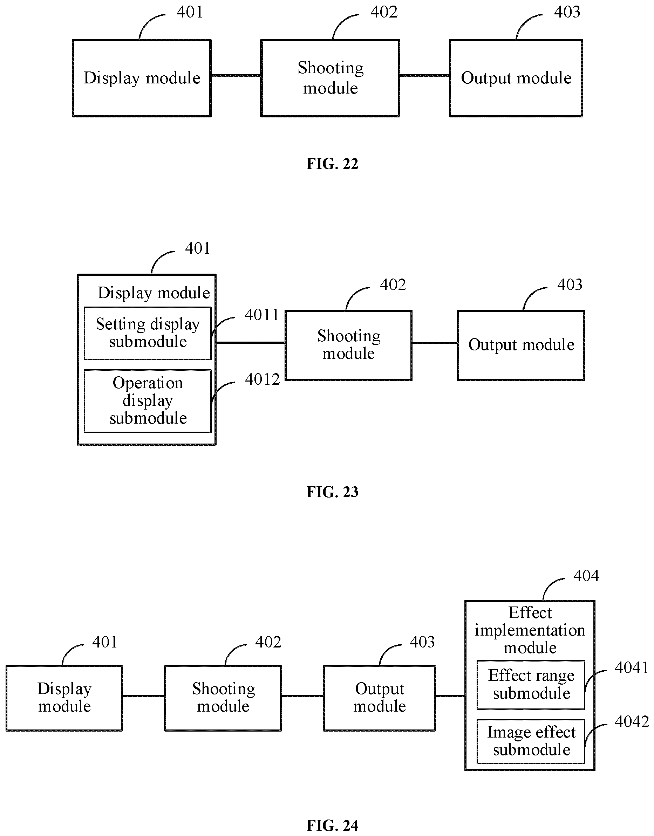

FIG. 22 is a block diagram of an image shooting apparatus according to an embodiment of the present disclosure. The image shooting apparatus may include a display module 401, a shooting module 402, and an output module 403.

The display module 401 is configured to display a user operation page of an information exchange virtual room on a client, the user operation page including a shooting control and an image region, a preview image being displayed in the image region, and the preview image including member images of at least two room members.

The shooting module 402 is configured to: perform image shooting on the preview image when a trigger operation through the shooting control is detected.

The output module 403 is configured to output an image obtained by the image shooting.

In some embodiments of the present disclosure, as shown in FIG. 23, the display module 401 includes a setting display submodule 4011 and an operation display submodule 4012.

The setting display submodule 4011 is configured to display a room setting page provided by a client, the room setting page including a room creation control.

The operation display submodule 4012 is configured to display the user operation page of the created information exchange virtual room in response to a trigger operation through the room creation control.

In some embodiments of the present disclosure, the operation display submodule includes an authentication display unit and an operation display unit.

The authentication display unit is configured to display an authentication control in response to the trigger operation through the room creation control.

The operation display unit is configured to: set authentication information for the created information exchange virtual room and display the user operation page of the created information exchange virtual room, when detecting that a setting operation through the authentication control is completed.

In some embodiments of the present disclosure, the authentication display unit is specifically configured to: display a room member quantity control and the authentication control in response to the trigger operation through the room creation control, the room member quantity control being configured to set a quantity threshold of room members in the information exchange virtual room.

In an embodiment, the authentication display unit is further configured to: display the room member quantity control in response to the trigger operation through the room creation control; and set the quantity threshold of room members in the created information exchange virtual room and display the authentication control, when detecting that a setting operation through the room member quantity control is completed.

In some embodiments of the present disclosure, the display module 401 includes an entering display submodule and an operation display submodule.

The entering display submodule is configured to display a room entering page provided by a client, the room entering page including a room entry for created information exchange virtual rooms.

The operation display submodule is configured to: add, in response to a trigger operation triggering the room entry, a room member identifier of the client to a specified information exchange virtual room, and display the user operation page of the specified information exchange virtual room.

In an embodiment, the display module 401 further includes an input display submodule.

The input display submodule is configured to: display a room identifier input control when a trigger operation through the room entering control is detected.

The operation display submodule is further configured to: add, based on an input operation through the room identifier input control, the room member identifier of the client to an information exchange virtual room corresponding to an inputted room identifier, and display a user operation page of the entered information exchange virtual room.

In some embodiments of the present disclosure, the operation display submodule is specifically configured to:
display, based on the input operation through the room identifier input control, an authentication information input control of the information exchange virtual room corresponding to the inputted room identifier; and
add, in a case that authentication information inputted through the authentication information input control passes verification, the room member identifier of the client to the information exchange virtual room corresponding to the room identifier, and display a user operation page of the information exchange virtual room.

In some embodiments of the present disclosure, the user operation page further includes a preview image effect control, and the image shooting apparatus further includes:
an effect implementation module 404, configured to apply an image effect on the preview image based on an operation through the preview image effect control.

In this embodiment, the shooting module 402 is configured to:
perform, when the trigger operation through the shooting control is detected, image shooting on the preview image applied with the image effect.

In some embodiments of the present disclosure, the preview image effect control includes a member image effect control. As shown in FIG. 24, the effect implementation module 404 includes an effect range submodule 4041 and an image effect submodule 4042.

The effect range submodule 4041 is configured to: display, based on a setting operation through the member image effect control, an effect range control corresponding to an inputted target member effect.

The image effect submodule 4042 is configured to apply, when detecting that a setting operation through the effect range control is completed, an image effect corresponding to the target member effect to a member image corresponding to the setting operation through the effect range control.

In some embodiments of the present disclosure, the effect range control includes an all-member control, the member images include a local member image collected in real time by a local terminal, and the effect range submodule 4041 is specifically configured to:
apply the image effect corresponding to the target member effect to all the member images in the image region in a case that a selection operation selecting the all-member control is detected.

In an embodiment, the effect range control includes a partial-member control. The effect range submodule 4041 is further configured to: apply the image effect corresponding to the target member effect to a selected member image in the image region in a case that a selection operation selecting the partial-member control is detected.

In an embodiment, the effect range control includes a local-member control. The effect range submodule 4041 is further configured to: apply the image effect corresponding to the target member effect to the local member image in the image region in a case that a selection operation selecting the local-member control is detected.

In some embodiments of the present disclosure, the image shooting apparatus further includes:
a preview image display module, configured to display an image preview page, the image preview page including the image obtained by the image shooting and an image editing control; and
an editing effect display module, configured to display, in real time on the image preview page, an effect of editing the image obtained by the image shooting based on an editing operation through the image editing control.

In some embodiments of the present disclosure, the image shooting apparatus further includes:
an acquiring module, configured to acquire an image collected in real time by a local terminal;
an extraction module, configured to extract a local member image from the real-time collected image and location information of the local member image in the real-time collected image;
a transmitting module, configured to transmit the local member image and the location information of the local member image to a server; and
a receiving module, configured to receive the preview image returned by the server based on the local member image and the location information of the local member image, the preview image including the member images of the at least two room members.

In some embodiments of the present disclosure, the image region includes at least two image sub-regions, and the display module includes an acquiring submodule and a display submodule.

The acquiring submodule is configured to acquire a mapping relationship between the image sub-regions and the room members; and
the display submodule is configured to display the user operation page of the information exchange virtual room on the client based on the mapping relationship, the user operation page including the image region, the image region including the at least two image sub-regions, and for each of the image sub-regions, the preview image in the image sub-region including a member image of a room member mapped to the image sub-region.

In this embodiment of the present disclosure, the display module 401 first displays a user operation page of an information exchange virtual room on a client, where the user operation page includes a shooting control and an image region, a preview image being displayed in the image region, and the preview image includes member images of at least two room members. When a trigger operation through the shooting control is detected, the shooting module 402 performs image shooting on the preview image, and finally the output module 403 outputs an image obtained by the image shooting. In the solution of the present disclosure, an information exchange virtual room is used as an intermediary, so that at least two room members can perform image shooting in a same preview image.

For more specific limitations on the image shooting apparatus, one may refer to the limitations on the image shooting method above. Details are not described herein again. The modules in the foregoing image shooting apparatus may be implemented entirely or partially by software, hardware, or a combination thereof. The foregoing modules may be built in or independent of a processor of a computer device in a hardware form, or may be stored in a memory of the computer device in a software form, so that the processor invokes the software to perform operations corresponding to the foregoing modules.

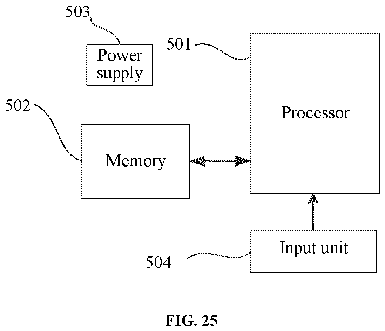

In addition, an embodiment of the present disclosure further provides a computer device. The computer device may be a terminal or a server. FIG. 25 is a block diagram of a computer device related to an embodiment of the present disclosure.

The computer device may include components such as one or more processors 501 including one or more processing cores, a memory 502 including one or more computer-readable storage media, a power supply 503, and an input unit 504. A person skilled in the art may understand that, the structure of the computer device shown in FIG. 25 does not constitute a limitation to the computer device. The computer device may include components that are more or fewer than those shown in the figure, or some components may be combined, or a different component deployment may be used.

The one or more processors 501 are a control center of the computer device, and is connected to various parts of the entire computer device by using various interfaces and lines. By running or executing software programs and/or modules stored in the memory 502, and invoking data stored in the memory 502, the processor performs various functions and data processing of the computer device, thereby performing overall monitoring on the computer device. Optionally, the one or more processors 501 may include one or more processing cores. Preferably, the one or more processors 501 may integrate one or more application processors and one or more modem processors. The application processor mainly processes an operating system, a user interface, an application program, and the like, and the one or more modem processors mainly process wireless communication. It is understood that alternatively, the one or more modem processors may not be integrated into the one or more processors 501.

The memory 502 may be configured to store the software programs and modules. The one or more processors 501 run the software programs and modules stored in the memory 502, to perform various function application and data processing. The memory 502 may mainly include a program storage area and a data storage area. The program storage area may store an operating system, an application program required by at least one function (for example, a sound playback function and an image display function), and the like. The data storage area may store data created according to use of the computer device, and the like. In addition, the memory 502 may include a high-speed random access memory, and may further include a nonvolatile memory, such as at least one magnetic disk storage device, a flash memory, or another volatile solid-state storage device. Correspondingly, the memory 502 may further include a memory controller, so that the one or more processors 501 can access the memory 502.

The computer device further includes the power supply 503 for supplying power to the components. Preferably, the power supply 503 may be logically connected to the one or more processors 501 by using a power management system, thereby implementing functions such as charging, discharging, and power consumption management by using the power management system. The power supply 503 may further include one or more of a direct current or alternating current power supply, a re-charging system, a power failure detection circuit, a power supply converter or inverter, a power supply state indicator, and any other component.

The computer device may further include the input unit 504. The input unit 504 may be configured to receive input digit or character information and generate keyboard, mouse, joystick, optical, or trackball signal input related to user settings and function control.

Although not shown in the figure, the computer device may further include a display unit, and the like. Details are not described herein again. Specifically, in this embodiment, the one or more processors 501 in the computer device may load executable files corresponding to processes of one or more application programs to the memory 502 according to the following instructions, and the one or more processors 501 run the application programs stored in the memory 502, to implement the following various functions:

displaying a user operation page of an information exchange virtual room on a client, the user operation page including a shooting control and an image region, a preview image being displayed in the image region, and the preview image including member images of at least two room members; performing image shooting on the preview image when a trigger operation through the shooting control is detected; and outputting an image obtained by the image shooting.

For specific implementations of the above operations, one may refer to the foregoing embodiments. Details are not described herein again.

A person of ordinary skill in the art could understand that, all or some steps of various methods in the embodiments may be implemented through computer-readable instructions, or implemented through the computer-readable instructions controlling relevant hardware, and the instructions may be stored in a computer-readable storage medium and loaded and executed by one or more processors.

Therefore, an embodiment of the present disclosure further provides one or more computer-readable storage media, storing computer-readable instructions. The computer-readable instructions can be loaded by one or more processors, so as to perform steps in any image shooting method provided in the embodiments of the present disclosure. For example, the computer-readable instructions may perform the following steps:
displaying a user operation page of an information exchange virtual room on a client, the user operation page including a shooting control and an image region, a preview image being displayed in the image region, and the preview image including member images of at least two room members; performing image shooting on the preview image when a trigger operation through the shooting control is detected; and outputting an image obtained by the image shooting.

For specific implementations of the above operations, one may refer to the foregoing embodiments. Details are not described herein again.

The storage medium may include: a read-only memory (ROM), a random access memory (RAM), a magnetic disk, an optical disc, or the like.

Because the computer-readable instructions stored in the storage medium are used to execute steps in any image shooting method provided in the embodiments of the present disclosure, beneficial effects that can be implemented in any image shooting method provided in the embodiments of the present disclosure can be achieved. For details, one may refer to the foregoing embodiments, and details are not described herein again.

The image shooting method, the image shooting apparatus, the computer device, and the storage medium provided in the embodiments of the present disclosure are described above in detail. Although the principles and implementations of the present disclosure are described by using specific examples in this specification, the descriptions of the foregoing embodiments are merely intended to help understand the method and the core idea of the method of the present disclosure. Meanwhile, a person skilled in the art may make modifications to the specific implementations and application range according to the idea of the present disclosure. In conclusion, the content of this specification should not be construed as a limitation to the present disclosure.

## Claims

1. An image shooting method, performed by a computer device and comprising:
displaying a user operation page of an information exchange virtual room, the user operation page comprising a shooting control and an image region, the image region comprising a preview image, and the preview image comprising member images of at least two room members;
performing image shooting on the preview image when a trigger operation performed through the shooting control is detected; and
outputting an image obtained by the image shooting.

2. The method according to claim 1, wherein the displaying a user operation page of an information exchange virtual room comprises:
displaying a room setting page provided by a client, the room setting page comprising a room creation control; and
displaying the user operation page of a created information exchange virtual room in response to a trigger operation through the room creation control.

3. The method according to claim 2, wherein the displaying the user operation page of a created information exchange virtual room in response to a trigger operation through the room creation control comprises:
displaying an authentication control in response to the trigger operation through the room creation control; and
setting authentication information for the created information exchange virtual room and displaying the user operation page of the created information exchange virtual room, when detecting that a setting operation through the authentication control is completed.

4. The method according to claim 3, wherein the displaying an authentication control in response to the trigger operation through the room creation control comprises:
displaying a room member quantity control and the authentication control in response to the trigger operation through the room creation control, the room member quantity control being configured to set a quantity threshold of room members in the information exchange virtual room.

5. The method according to claim 4, wherein the displaying a room member quantity control and the authentication control in response to the trigger operation through the room creation control comprises:
displaying the room member quantity control in response to the trigger operation through the room creation control; and
setting the quantity threshold of room members in the created information exchange virtual room and displaying the authentication control, when detecting that a setting operation through the room member quantity control is completed.

6. The method according to claim 1, wherein the displaying a user operation page of an information exchange virtual room comprises:
displaying a room entering page provided by a client, the room entering page comprising a room entry for created information exchange virtual rooms; and
adding, in response to a trigger operation triggering the room entry, a room member identifier of the client to a specified information exchange virtual room, and displaying the user operation page of the specified information exchange virtual room.

7. The method according to claim 6, wherein the room entry comprises a room entering control; and the adding, in response to a trigger operation triggering the room entry, a room member identifier of the client to a specified information exchange virtual room comprises:
displaying a room identifier input control when a trigger operation through the room entering control is detected; and
adding, based on an input operation through the room identifier input control, the room member identifier of the client to an information exchange virtual room corresponding to an inputted room identifier.

8. The method according to claim 7, wherein the adding, based on an input operation through the room identifier input control, the room member identifier of the client to an information exchange virtual room corresponding to an inputted room identifier comprises:
displaying, based on the input operation through the room identifier input control, an authentication information input control of the information exchange virtual room corresponding to the inputted room identifier; and
adding, in a case that authentication information inputted through the authentication information input control passes verification, the room member identifier of the client to the information exchange virtual room corresponding to the room identifier.

9. The method according to claim 1, wherein the user operation page further comprises a preview image effect control, and the method further comprises:
applying an image effect on the preview image based on an operation through the preview image effect control; and
the performing image shooting on the preview image when a trigger operation through the shooting control is detected comprises:
performing, when the trigger operation through the shooting control is detected, image shooting on the preview image applied with the image effect.

10. The method according to claim 9, wherein the preview image effect control comprises a member image effect control, and the applying an image effect on the preview image based on an operation through the preview image effect control comprises:
displaying, based on a setting operation through the member image effect control, an effect range control corresponding to an inputted target member effect; and
applying, when detecting that a setting operation through the effect range control is completed, an image effect corresponding to the target member effect to a member image corresponding to the setting operation through the effect range control.

11. The method according to claim 10, wherein the effect range control comprises an all-member control, and the member images comprise a local member image collected in real time by a local terminal; and
the applying, when detecting that a setting operation through the effect range control is completed, an image effect corresponding to the target member effect to a member image corresponding to the setting operation through the effect range control comprises:
applying the image effect corresponding to the target member effect to all the member images in the image region in a case that a selection operation selecting the all-member control is detected.

12. The method according to claim 10, wherein the effect range control comprises a partial-member control, and the member images comprise a local member image collected in real time by a local terminal; and
the applying, when detecting that a setting operation through the effect range control is completed, an image effect corresponding to the target member effect to a member image corresponding to the setting operation through the effect range control comprises:
applying the image effect corresponding to the target member effect to a selected member image in the image region in a case that a selection operation selecting the partial-member control is detected.

13. The method according to claim 10, wherein the effect range control comprises a local-member control, and the member images comprise a local member image collected in real time by a local terminal; and
the applying, when detecting that a setting operation through the effect range control is completed, an image effect corresponding to the target member effect to a member image corresponding to the setting operation through the effect range control comprises:
applying the image effect corresponding to the target member effect to the local member image in the image region in a case that a selection operation selecting the local-member control is detected.

14. The method according to claim 1, wherein the outputting an image obtained by the image shooting comprises:
displaying an image preview page, the image preview page comprising the image obtained by the image shooting and an image editing control; and
displaying, in real time on the image preview page, an effect of editing the image obtained by the image shooting based on an editing operation through the image editing control.

15. The method according to claim 1, before the displaying a user operation page of an information exchange virtual room, further comprising:
acquiring an image collected in real time by a local terminal;
extracting a local member image from the real-time collected image and location information of the local member image in the real-time collected image;
transmitting the local member image and the location information of the local member image to a server; and
receiving the preview image returned by the server based on the local member image and the location information of the local member image, the preview image comprising the member images of the at least two room members.

16. The method according to claim 1, wherein the image region comprises at least two image sub-regions, and the displaying a user operation page of an information exchange virtual room comprises:
acquiring a mapping relationship between the image sub-regions and the room members; and
displaying the user operation page of the information exchange virtual room based on the mapping relationship, the user operation page comprising the image region, the image region comprising the at least two image sub-regions, and for each of the image sub-regions, the preview image in the image sub-region comprising a member image of a room member mapped to the image sub-region.

17. An image shooting apparatus, provided in a computer device and comprising:
a display module, configured to display a user operation page of an information exchange virtual room, the user operation page comprising a shooting control and an image region, a preview image being displayed in the image region, and the preview image comprising member images of at least two room members;
a shooting module, configured to perform image shooting on the preview image when a trigger operation through the shooting control is detected; and
an output module, configured to output an image obtained by the image shooting.

18. A computer device, comprising a memory, and one or more processors, wherein computer-readable instructions are stored in the memory and executable by the one or more processors, the one or more processors is configured to perform the method according to any one of claims 1 to 16 when executing the computer-readable instructions.

19. One or more computer-readable storage medium, storing multiple computer-readable instructions, wherein the computer-readable instructions are used to, when being loaded to one or more processors, perform the method according to any one of claims 1 to 16.
